# EUROPEAN PATENT APPLICATION

(11) **EP 0 560 355 A1**
(43) Date of publication of application: **15.09.1993**
(21) Application number: 93103930.9
(22) Date of filing: 11.03.1993
(51) Int. Cl.: B60R 21/20

(54) **Air bag module**

(30) Priority: 12.03.1992 JP 22283/92 U; 30.06.1992 JP 52099/92 U
(71) Applicant: SENSOR TECHNOLOGY CO., LTD., Hyogo 651-22 (JP)
(72) Inventor: Otani, Yasuhiko, c/o Sensor Technology Co., Ltd., Kobe-shi, Hyogo (JP); Takeda, Masaru, c/o Sensor Technology Co., Ltd., Kobe-shi, Hyogo (JP); Maeda, Takenori, c/o Sensor Technology Co., Ltd., Kobe-shi, Hyogo (JP); Uemura, Masaaki, c/o Sensor Technology Co., Ltd., Kobe-shi, Hyogo (JP); Saito, Hiroyuki, c/o Sensor Technology Co., Ltd., Kobe-shi, Hyogo (JP)
(74) Representative: Tiedtke, Harro, Dipl.-Ing.

(57) **Abstract**

This is an air bag module in which air bag (15), gas generator (13) and crash sensor (14) are composed in one body. According to the invention, an air bag is provided in a cover (16) located in the central part of the steering wheel (2), a gas generator (13) for inflating the air bag (15) with gas is fixed to the base affixed to the bottom of the steering wheel (2), a crash sensor (14) for detecting crash is attached to the base either directly or indirectly, the cover (16) is fitted and movable to the base to form in one body, and a horn switch (22) is provided between the cover (16) and the base. An impact is transmitted to the crash sensor (14) through the steering wheel (2) and the base, and when the cover (16) movable on the base is pressed, the horn switch (22) is actuated.

## Description

### BACKGROUND OF THE INVENTION

### 1. Field of the Invention

The present invention relates to an air bag module used in an air bag system for protecting the driver from the impact of an automobile crash accident, and more particularly to a module comprises not only a crash sensor but also a horn switch.

### 2. Description of the Prior Art

The air bag module is a module at least comprising a gas generator and an air bag in one body, and is disposed in the central part of the steering wheel. Incidentally, if the air bag module is not disposed in the steering wheel, a movable element is disposed in the central part of the steering wheel, and a horn switch is provided between the movable element and the steering wheel. Accordingly, when disposing the air bag module, the location of the horn switch must be changed.

And so, in case of the separate type air bag system consisting of a crash sensor provided at a proper front position of the vehicle and an air bag module installed in the steering wheel, as disclosed in the Japanese Patent Publication Sho. 63-17657, the entire air bag module is installed and movable in the steering wheel, and the horn switch is put on this moving part.

However, in case of the air bag module of all-in-one type comprising not only the gas generator and air bag but also the crash sensor and auxiliary power supply in one body, when the module is installed and movable in the steering wheel, the impact is not transmitted to the crash sensor. Therefore, as disclosed in the Japanese Laid-open Patent Hei. 4-43157, it is proposed to bury a surface sensor as a horn switch in a breakable cover which keeps the air bag inside the steering wheel. This surface sensor, however, has problems of the durability for repeated uses.

In other practical example, a small movable element for horn switch is separately provided at a proper position in the circumference of the air bag module (usually at right and left sides). But in this case, a driver may feel strange and it takes time until getting accustomed, for the driver is familiar with manipulation of the central movable element in the steering wheel, .

### 3. Object of the Invention

This invention is therefore devised in the light of these problems, and it is hence a primary object thereof to present an air bag module of all-in-one type having a movable element in the central part of the steering wheel and also incorporating a horn switch in one body though an air bag module incorporating a crash sensor in one body.

It is other object to present an air bag module capable of preventing the air bag from being damaged by the movable element.

### SUMMARY OF THE INVENTION

In the invention of the air bag module, an air bag is provided in a cover located in the central part of the steering wheel, a gas generator for inflating the air bag with gas is fixed to the base affixed to the bottom of the steering wheel, a crash sensor for detecting crash is attached to the base either directly or indirectly, the cover is fitted and movable to the base to form in one body, and a horn switch is provided between the cover and the base, in which the impact of crash is transmitted to the crash sensor through the base, while the cover works as a movable element for actuating the horn switch to honk the horn. And so, though the air bag module incorporating a crash sensor fixed to the steering wheel, the horn can be honked same as in the conventional sense by the movable element located in the center of the steering wheel.

Also this invention of the air bag module comprises an inner cover for incorporating the air bag in the cover, and the inner cover has a gas lead-in passage from a gas generator to the air bag. So, if the surface of the cover is pushed in, the air bag itself is free from the stress.

### BRIEF DESCRIPTION OF THE DRAWINGS

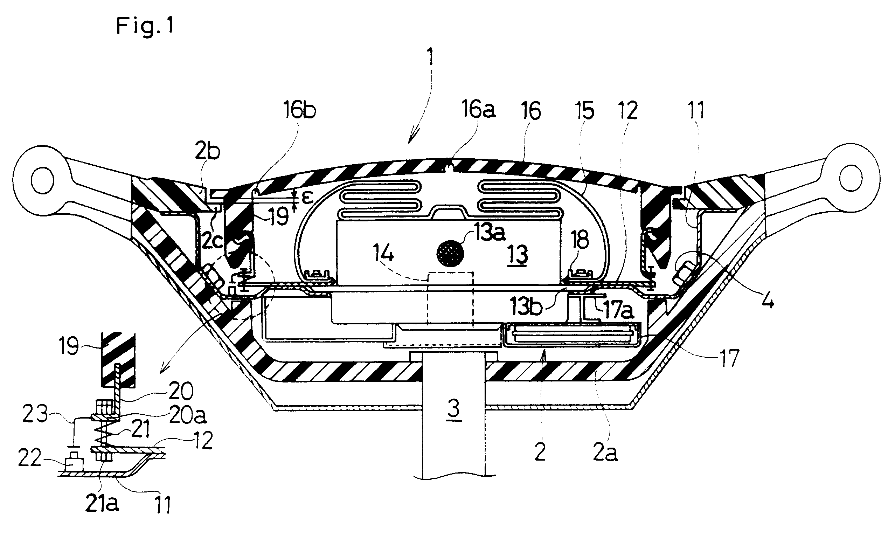

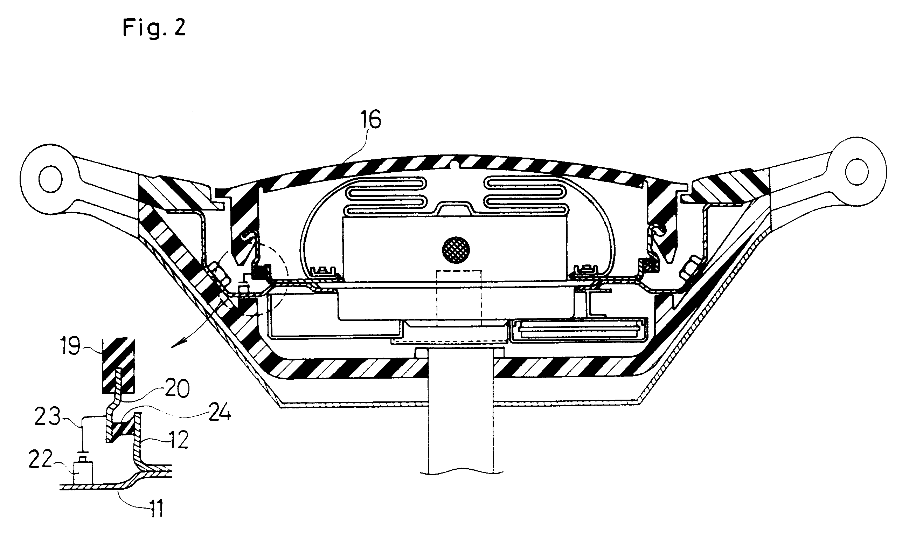

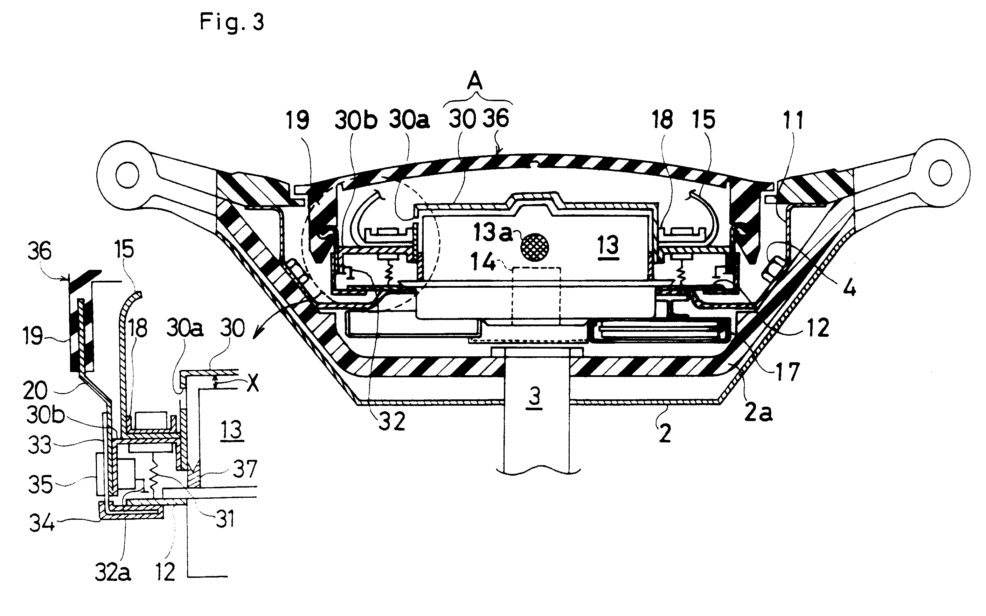

Fig. 1 is a sectional view of an air bag module of the invention, Fig. 2 is a sectional view of other air bag module of the invention, and Fig. 3 is a sectional view of another air bag module of the invention.

### DETAILED DESCRIPTION OF THE INVENTION

Referring now to the drawings, some of the preferred embodiment of the invention are described below. In Fig. 1 showing the state of an air bag module installed in a steering wheel, numeral 1 denotes an air bag module of all-in-one type, 2 is a steering wheel, 2a is a hub of steering wheel, and 3 is a steering shaft. The air bag module 1 is affixed to the hub 2a or/and spoke portion through bolt and nut 4.

The air bag module 1 comprises and incorporates principal parts, such as a base composed of a first base 11 and a second base 12, a gas generator 13, a crash sensor 14, an air bag 15, a cover 16, and a power supply unit 17 composed of auxiliary power source circuit, diagnosis circuit and others.

The first base 11 has a shape along the interior surface of hub 2a or/and spoke portion, and is fixed to the hub 2a or/and spoke portion through bolt 4. The second base 12 fixes the gas generator 13 together with the first base 11.

The gas generator 13 has the crash sensor 14 incorporated in the middle of its bottom, and the power supply unit 17 is disposed at the side of the bottom of the gas generator 13. In the gas generator 13, the crash sensor 14, also ignition device, flame transmitter, gas generator and filter are sequentially incorporated, and when the crash of the vehicle is sensed by the crash sensor 14, the gas is released from a gas hole 13a, and the air bag 15 is inflated instantly. The crash sensor 14 is available in both electric type for closing the contact by the move of the inertial mass at the time of crash, and mechanical type for releasing and striking the ignition pin on the detonator the move of the inertial mass at the time of crash. Meanwhile, instead of the type of fixing the crash sensor indirectly to the first base 11, such as fixing the gas generator 13 which incorporates the crash sensor 14 to the first base 11, the crash sensor 14 may be directly provided at a proper position beneath the first base 11.

The air bag 15 is nearly spherical when inflated, but it is usually folded down around the gas generator 13. The mounting part of the air bag 15 is held between a first retainer ring 18 and the second base 12, and is tightened together with the flange 13b of gas generator 13, first base 11, and mounting part 17a of power supply unit 17.

The cover 16 wraps over the air bag 15, and is fitted and movable relatively into a spigot 2c of plural mounting parts 2b projecting laterally from the steering wheel 2 with gap ε. The plane of the cover 16 is provided with thin wall parts 16a, 16b and it is designed to open on both sides when the air bag 15 is inflated. An insert 20 is fitted into a drooping part 19 of the cover 16.

The lower end of the insert 20 is a flange 20a, and the second base 12 and flange 20a are coupled together by a bolt 21a through a spring 21. That is, by the thrusting force of the spring 21, the cover 16 is pushed up from the steering wheel 2 by the gap ε. When the cover 16 is pressed resisting the thrusting force of the spring 21, the gap ε is reduced, and the cover 16 is allowed to move freely in the axial direction of the steering shaft on the bases 11, 12. A horn switch 22 is fitted to the first base 11, and a detection piece 23 is fitted to the insert 20 of the cover 16.

Thus constructed air bag module of all-in-one type operates as follows. When an impact occurs due to crash accident of vehicle, the impact is transmitted to the crash sensor 14 by way of the steering shaft 3, hub 2a or/and spoke portion of steering wheel 2, bases 11, 12 fixed to the steering wheel 2, and gas generator 13 fixed to the base 11. Consequently the gas generator 13 is actuated, and the air bag 15 is inflated, and the cover 16 is opened, thereby the air bag 15 is a cushion material between the driver and the steering wheel.

On the other hand, in ordinary operation, when the surface of the cover 16 is pushed in, the spring 21 becomes small, and the cover 16 moves in the direction of narrowing the gap ε, and the horn switch 22 is actuated by the detecting piece 23, thereby honking the horn. Thus, the cover 16 works as the movable element for actuating the horn switch 22 to honk the horn. The distance of the insert 20 of cover 16 and the base 12 is kept at the maximum gap ε by the bolt 21a as the stopper member and resisting the force of the spring 21.

Fig. 2 shows a sectional view of other air bag module. What is different from Fig. 1 is that an elastic rubber 24 is adhered between the cover insert 20 and second base 12 as thrusting means by baking or other process. Same as in Fig. 1, by the deformation of the elastic rubber 24, the cover 16 is moved, and the horn switch 22 is actuated by the detecting piece 23, thereby honking the hone.

Fig. 3 is a sectional view of another air bag module. What is different from Fig. 1 is that a cover 36 possible to open is fitted to an inner cover 30 for covering the upper pat of the gas generator 13 comprising a gas lead-in passage 30a for feeding the gas from the air hole 13a of the gas generator 13 into the air bag. By this inner cover 30, the air bag 15 is incorporated in the cover 36.

Referring to the magnified view in Fig. 3, the mounting structure of the cover 36 incorporating the air bag in the second base 12 is explained below. The second base 12 is provided with the cover 36 by means of the following structure at four point of it.

The inner cover 30 is lifted by the spring 31 so that the distance X of the inner cover 30 from the upper surface of the gas generator 13 may be more than the working distance of the horn switch 32 by the move of the cover 36, and is positioned by the folded part of a cover holding plate 33. Between the circumference of the gas generator 13 and the inner cover 30, a seal 37 is fitted in so that the gas may not escape outside.

A flange 30b having a drooping portion is provided around the inner cover 30, and the air bag 15 is fitted to this part. The drooping portion of the flange 30b, the insert 20 of the cover 36, and the cover holding part 33 are joined together by the guide 35 in which the insert is formed.

The detecting piece 32a of the horn switch 32 provided in the guide 35 so that the horn switch 32 may function in contact with the second base 12.

The cover holding plate 33 is folded in the front end so that the cover 36 itself may not pop out due to the pressure of the gas when inflating the air bag 15, and is kept in contact so that the folded part may be hooked on the second base 12.

The insulation rubber 34 is fitted to the contact part of the cover holding plate 33 so as to keep insulation between the cover holding plate 33 and second base 12.

The air bag module of all-in-one type in the above constitution is designed so that the entire cover 36 incorporating the air bag 15 in its inside may move, therefore if the surface of the cover 36 is pushed in, the air bag 15 itself is free from deformation or other stress.

This is an air bag module in which air bag, gas generator and crash sensor are composed in one body. According to the invention, an air bag is provided in a cover located in the central part of the steering wheel, a gas generator for inflating the air bag with gas is fixed to the base affixed to the bottom of the steering wheel, a crash sensor for detecting crash is attached to the base either directly or indirectly, the cover is fitted and movable to the base to form in one body, and a horn switch is provided between the cover and the base. An impact is transmitted to the crash sensor through the steering wheel and the base, and when the cover movable on the base is pressed, the horn switch is actuated.

## Claims

1. An air bag module incorporating an air bag, a gas generator, a crash sensor and a base inside a cover, and fixed to a steering wheel, comprising:
a gas generator for generating gas in the event of crash, a base fixed to the steering wheel, mounting the gas generator thereon, a crash sensor for detecting crash as being fitted either directly or indirectly to the base, an air bag installed so as to cover the gas flow-out hole of the gas generator, a cover for accommodating the air bag, mounting means for mounting the cover being movable on the base, and a horn switch provided between the cover and base.

2. An air bag module according to claim 1, wherein the crash sensor is disposed inside of the gas generator.

3. An air bag module according to claim 1, wherein thrusting means for keeping the gap of the base and cover at a distance not to actuate the horn switch is provided, and the horn switch is actuated by pressing the cover surface by resisting the thrusting means as the gap becomes smaller.

4. An air bag module incorporating an air bag, a gas generator, a crash sensor and a base inside a cover, and fixed to a steering wheel, comprising:
a gas generator for generating gas in the event of crash, a base fixed to the steering wheel, mounting the gas generator thereon, a crash sensor for detecting crash as being fitted either directly or indirectly to the base, an air bag installed so as to cover the gas flow-out hole of the gas generator, a cover for accommodating the air bag, an inner cover for incorporating the air bag in the cover, mounting means for mounting the inner cover or cover being movable on the base, a gas lead-in passage for leading the gas from the inner cover to the air bag, and a horn switch provided between the inner cover or cover and base.

5. An air bag module according to claim 4, wherein a seal member is provided between the inner cover and gas generator.
